# EUROPEAN PATENT APPLICATION

(11) **EP 3 429 132 A1**
(43) Date of publication of application: **16.01.2019**
(21) Application number: 16893597.1
(22) Date of filing: 21.11.2016
(51) Int. Cl.: H04L 12/28, G05B 19/042

(54) **MASTER-SLAVE CONTROL SYSTEM, METHOD FOR CONTROLLING MASTER-SLAVE CONTROL SYSTEM, INFORMATION PROCESSING PROGRAM, AND RECORDING MEDIUM**

(30) Priority: 11.03.2016 JP 2016048958
(71) Applicant: Omron Corporation, Kyoto-shi, Kyoto 600-8530 (JP)
(72) Inventor: OZAKI, Toshiyuki, Kyoto-shi Kyoto 600-8530 (JP); KITAMURA, Yasuhiro, Kyoto-shi Kyoto 600-8530 (JP)
(74) Representative: Ter Meer Steinmeister & Partner
(86) International application number: PCT/JP2016/084421
(87) International publication number: WO 2017/154273

(57) **Abstract**

In order to make it easy for a user to know which device is to be connected to a communication port, a control system (1) notifies a user of the format name of a device (20) scheduled to be connected, when the identification information of the device (20) scheduled to be connected to a device communication port (110) does not match the identification information of the device (20) actually connected thereto.

## Description

### [Technical Field]

The present invention relates to a master-slave control system that includes a master device and a slave device that is connected to the master device via a network.

### [Background Art]

In the related art, a master-slave control system that includes a master device and a slave device that is connected to the master device via a network is known.

For example, in Patent Literature 1 listed below, a device configured to display an instrument ID and the like of a field instrument to be connected to an IO unit is described.

### [Citation List]

### [Patent Literature]

Patent Literature 1: Japanese Unexamined Patent Application Publication No. 2004-220495 (published August 5, 2004)

### [Summary of Invention]

### [Technical Problem]

However, the related art described above has a problem in that, since information identifying a field instrument to be connected to an IO unit is displayed as only numerical values, it is difficult for a user to ascertain a device to be connected to the communication port.

The present invention has been made in view of the above problem, and an object of the present invention is to realize a master-slave control system through which it is possible for a user to easily ascertain a device to be connected to a communication port.

### [Solution to Problem]

In order to address the above problem, a master-slave control system according to an embodiment of the present invention is a master-slave control system including a controller as a master device and a slave device that is connected to the controller via a network and includes a communication port to which a device is connected, the master-slave control system including: a storage unit configured to store configuration information including identification information of a device scheduled to be connected to the communication port; an acquisition unit configured to acquire identification information of a device from the device connected to the communication port; a comparison unit configured to compare identification information acquired from the acquisition unit with the identification information included in the configuration information; and a notification unit configured to, when the comparison unit determines that identification information acquired by the acquisition unit and the identification information included in the configuration information do not match, notify a user of a name of the type of the device scheduled to be connected to the communication port.

In order to address the above problem, a method for controlling a master-slave control system according to an embodiment of the present invention causing a computer including a storage unit in which configuration information including identification information of a device scheduled to be connected to a communication port of a slave device is stored in a master-slave control system including a controller as a master device and the slave device connected to the controller via a network to execute: an acquisition step of acquiring identification information of a device from the device connected to the communication port; a comparison step of comparing the identification information acquired in the acquisition step with the identification information included in the configuration information; and a notification step of notifying a user of a name of the type of the device scheduled to be connected to the communication port when it is determined in the comparison step that the identification information acquired in the acquisition step and the identification information included in the configuration information do not match.

### [Advantageous Effects of Invention]

In the present invention, in a master-slave control system including a controller as a master device and a slave device that is connected to the controller via a network and includes a communication port to which a device is connected, there is an effect that the user can easily ascertain the device to be connected to the communication port.

### [Brief Description of Drawings]

Fig. 1 is a block diagram showing a main part configuration of a device communication management unit and a support tool included in a control system according to Embodiment 1 of the present invention.
Fig. 2 is a diagram showing a general overview of the control system in Fig. 1.
Fig. 3 is a diagram explaining a method of registering identification information of a device to be connected in the device communication management unit in Fig. 1.
Fig. 4 is a table showing an example of execution subjects of a display process and a comparison process in the control system 1.
Fig. 5 is a diagram showing an example of execution subjects of a display process and a comparison process in the control system 1.
Fig. 6 is a diagram showing another example of execution subjects of a display process and a comparison process in the control system 1.
Fig. 7 is a diagram showing another example of execution subjects of a display process and a comparison process in the control system 1.
Fig. 8 is a diagram showing another example of execution subjects of a display process and a comparison process in the control system 1.
Fig. 9 is a diagram showing another example of execution subjects of a display process and a comparison process in the control system 1.
Fig. 10 is a diagram showing another example of execution subjects of a display process and a comparison process in the control system 1.

### [Description of Embodiments]

### [Embodiment 1]

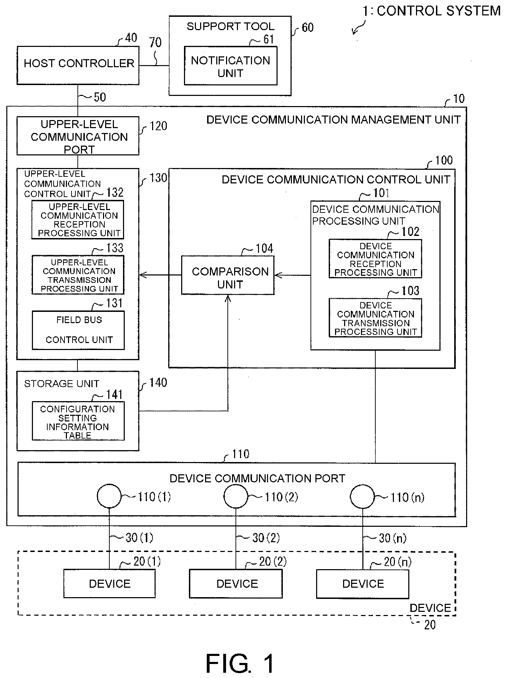

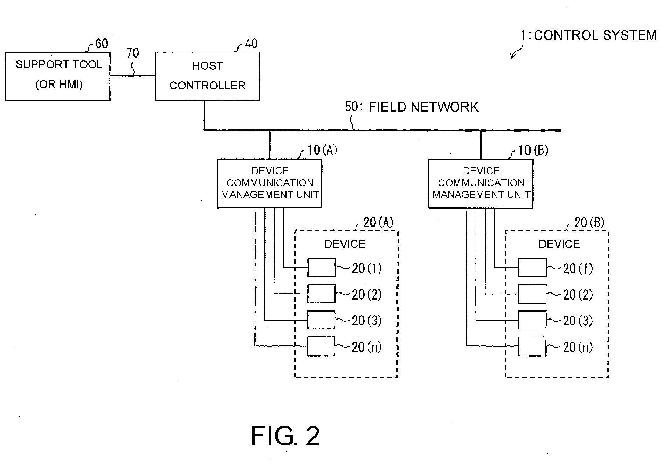

Embodiment 1 of the present invention will be described below in detail with reference to Fig. 1 to Fig. 10. The same or corresponding parts in the drawings will be denoted with the same reference numerals and descriptions thereof will not be repeated. An overview of a control system 1 (master-slave control system) according to an embodiment of the present invention will be described with reference to Fig. 2.

### (Overview of control system of Embodiment 1)

Fig. 2 is a diagram showing an overview of the control system 1. As shown in Fig. 2, the control system 1 includes a host controller 40 (controller) and at least one device communication management unit 10 that is connected to the host controller 40 via a field network 50 (upper-level bus, that is, upper-level communication network). In the example shown in Fig. 2, a device communication management unit 10(A) and a device communication management unit 10(B) are connected to the host controller 40 via the field network 50. Here, in the following description, when there is no need to particularly distinguish the device communication management unit 10(A) and the device communication management unit 10(B), they will be referred to as the "device communication management unit 10."

The control system 1 is a master-slave control system that includes the host controller 40 as a master device and the device communication management unit 10 as at least one slave device that is connected to the master device via a network (the field network 50). The host controller 40 is called a "master device" in the sense that it manages data transmission via the field network 50, whereas the device communication management unit 10 is called a "slave device."

In the control system 1, at least one device 20 is connected to the device communication management unit 10 through a device communication cable 30. In the example shown in Fig. 2, the devices 20(1), 20(2), 20(3), ···, 20(n) are connected to the device communication management unit 10 through the device communication cable 30. Here, in the following description, when there is no need to particularly distinguish the devices 20(1), 20(2), 20(3), ···, 20(n), they will be referred to as the "device 20."

The host controller 40 is, for example, a programmable logic controller (PLC), and is a master device configured to manage data transmission via the field network 50 in the control system 1. The slave device connected to the host controller 40 as a master device may include a servo driver (not shown) that is directly connected to the field network 50 in addition to the device communication management unit 10. Further, when a plurality of host controllers 40 are connected to the field network 50, any one of the host controllers 40 may be a master device and the remaining host controllers 40 may be slave devices. Furthermore, a control subject that is different from the host controller 40 and the device communication management unit 10 may be a master device. That is, the "master device" and the "slave device" are defined by focusing on a control function of data transmission on the field network 50, and there is no particular limitation on types of information that are transmitted and received between devices.

The host controller 40 performs overall control of the control system 1. Specifically, the host controller 40 acquires information from the device 20 which is an input instrument such as a sensor as input data, and performs arithmetic processing using the acquired input data according to a user program that is installed in advance. Then, the host controller 40 performs the arithmetic processing, determines control content for the device 20 which is an output instrument such as an actuator, and outputs control data corresponding to the control content to the device 20.

Various types of data that are received by the host controller 40 or transmitted by the host controller 40 are transmitted via the field network 50. The field network 50 is, for example, EtherCAT (registered trademark), PROFINET (registered trademark), MECHATROLINK (registered trademark)-III, Powerlink, SERCOS (registered trademark)-III, or CIP Motion. In addition, the field network 50 may be, for example, EtherNet/IP (registered trademark), DeviceNet, or CompoNet (registered trademark). Here, in the following description, the control system 1 in which data is transmitted and received between the host controller 40 and the device communication management unit 10 or between the device communication management unit 10(A) and the device communication management unit 10(B) when data frames are sequentially transferred on the field network 50 will be described. In addition, in the following description, the field network 50 may be referred to as an "upper-level bus (upper-level communication network)" in order to allow contrast with communication through the device communication cable 30 which is a lower-level communication network. Further, in order to distinguish it from a data frame that is transmitted through the device communication cable 30, a data frame on the field network 50 will be referred to as an "upper-level data frame."

As shown in Fig. 2, in addition, a support tool 60 or an HMI 80 is connected to the host controller 40 through, for example, a communication cable 70 which is a universal serial bus (USB) cable.

The support tool 60 is an information processing device configured to set various parameters for the control system 1. For example, a timing at which a state value is acquired (input refresh) and a timing at which an output value is updated (output refresh) may be calculated and set by the support tool 60. Typically, the support tool 60 is constituted by, a general-purpose computer. For example, an information processing program executed in the support tool 60 may be stored in a compact disk-read only memory (CD-ROM) which is not shown and distributed. The program stored in the CD-ROM is read by a CD-ROM driving device (not shown), and is stored in a hard disk of the support tool 60 or the like. Alternatively, the program may be downloaded from an upper-level host computer via a network. The human machine interface (HMI) 80 may be connected to the host controller 40 through the communication cable 70 in place of the support tool 60.

The HMI 80 is a unit for exchanging information between a human and a machine, and specifically, a unit by which a human manipulates a machine (issues an instruction to a machine), and a machine notifies a human of a current state and a result. Regarding the HMI 80, the unit by which a human issues an instruction to a machine includes, for example, a switch, a button, a handle, a dial, a pedal, a remote controller, a microphone, a keyboard, and a mouse. In addition, the unit by which a machine provides information about a current state, a result, and the like to a human includes, for example, a liquid crystal screen, a meter, a lamp, and a speaker.

In the control system 1, the support tool 60 or the HMI 80 connected to the host controller 40 through the communication cable 70 receives a user manipulation for the host controller 40 or the like to ascertain a system configuration of the control system 1. For example, a user inputs the following information to the support tool 60 or the HMI 80. That is, the user inputs identification information of the device communication management unit 10, the devices 20(1), 20(2), ···, 20(n) scheduled to be connected to device communication ports 110(1), 110(2), ···, 110(n) of the device communication management unit 10, the host controller 40, and the like. The support tool 60 or the HMI 80 transmits the above information input by the user to the device communication management unit 10 via the field network 50 (the host controller 40). That is, "identification information of the device communication management unit 10, the devices 20(1), 20(2), ···, 20(n) scheduled to be connected to the device communication port 110 of the device communication management unit 110(1), 110(2), ···, 110(n), the host controller 40, and the like" is transmitted to the device communication management unit 10 via the field network 50 (the host controller 40).

As will be described below in detail, the device communication management unit 10 stores "identification information of the devices 20(1), 20(2), ···, 20(n) scheduled to be connected to the device communication ports 110(1), 110(2), ···, 110(n)" received from the support tool 60 or the HMI 80 in a configuration setting information table 141. Then, the device communication management unit 10 performs a comparison process of comparing the identification information stored in the configuration setting information table 141 with "identification information of the devices 20(1), 20(2), ···, 20(n) that are actually connected to the device communication ports 110(1), 110(2), ···, 110(n)."

In the control system 1, the support tool 60 or the HMI 80 connected to the host controller 40 via the communication cable 70 can notify the user of a result of the comparison process performed in the device communication management unit 10.

In particular, when the identification information (identification information of registered devices) stored in the configuration setting information table 141 and identification information of the device 20 that is actually connected (identification information of an actual device) do not match, the device communication management unit 10 determines that comparison has failed. When the device communication management unit 10 determines that "comparison has failed," the support tool 60 or the HMI 80 notifies the user of "identification information of the devices 20(1), 20(2), ···, 20(n) (identification information of registered devices) scheduled to be connected to the device communication ports 110(1), 110(2), ···, 110(n)."

Here, "the device 20 (registered device) scheduled to be connected to the device communication port 110 (in other words, scheduled to be connected to the device communication port 110)" is the device 20 registered as a device to be connected to each of the device communication ports 110(1), 110(2), ···, 110(n). That is, for each of the device communication ports 110(1), 110(2), ···, 110(n), the device 20 (registered device) to be connected is registered in advance as, for example, configuration information (configuration data). "The device 20 (registered device) scheduled to be connected" is a device 20 that is predetermined as a device to be connected to the device communication port 110, and is a device 20 that is registered in the device communication management unit 10 as a device to be connected to the device communication port 110. For example, identification information of "the device 20 (registered device) scheduled to be connected" is stored (registered) in the configuration setting information table 141 as configuration information (configuration data) for the device communication ports 110(1), 110(2), ···, 110(n).

The support tool 60 and the HMI 80 can transmit a message for instructing execution of an arbitrary process to the device communication management unit 10 through the host controller 40 (the field network 50). The device communication management unit 10 that has received the message performs a process whose execution is instructed in the message and transmits an execution result to the support tool 60 and the HMI 80 through the host controller 40 (the field network 50).

For example, the support tool 60 and the HMI 80 output a message for requesting transmission of identification information (in particular, a name of the type or the like) of a registered device for each device communication port 110 to the device communication management unit 10 through the host controller 40 (the field network 50). The device communication management unit 10 that has received the message transmits "identification information of a registered device for each device communication port 110 (in particular, a name of the type or the like)" acquired with reference to the configuration setting information table 141 to the support tool 60 (the HMI 80). The support tool 60 and the HMI 80 output a message for requesting transmission of identification information of an actual device for each device communication port 110 to the device communication management unit 10 through the host controller 40 (the field network 50). The device communication management unit 10 that has received the message acquires identification information from each of the devices 20(1), 20(2), ···, 20(n) that are actually connected to the device communication ports 110(1), 110(2), ···, 110(n), and transmits the acquired identification information to the support tool 60 (the HMI 80).

The device communication management unit 10 is a slave device connected to the host controller 40 as a master device via a network (the field network 50) in the control system 1 which is a master-slave control system.

That is, the device communication management unit 10 controls communication between the host controller 40 (the field network 50) and the device 20. For example, the device communication management unit 10 transmits detection information detected by the device 20 which is an input instrument such as a sensor connected to the device communication management unit 10 to the host controller 40 via the field network 50. Then, the host controller 40 executes a user program on the basis of the acquired detection information and transmits the execution result as a control instruction signal to the device communication management unit 10 via the field network 50. The device communication management unit 10 outputs the control instruction received via the field network 50 to an output instrument (the device 20 such as an actuator) to be operated.

The device communication management unit 10 includes an upper-level communication port 120 to which a transmission cable for communication with the host controller 40 via the field network 50 is connected. In addition, the device communication management unit 10 includes one or more device communication ports 110(1), 110(2), ···, 110(n) to which the device communication cable 30 for communication with at least one device 20 is connected. Here, in the following description, when there is no need to particularly distinguish the device communication ports 110(1), 110(2), ···, 110(n), they will be referred to as the "device communication port 110."

The device communication management unit 10 performs a process related to data transmission of the field network 50 and controls transmission and reception (input and output) of data with the device 20. The device communication management unit 10 can transmit and receive data larger than 1 bit to and from "the devices 20(1), 20(2), ···, 20(n) connected to the device communication ports 110(1), 110(2), ···, 110(n)."

The device communication management unit 10 can transmit and receive (input and output) analog data in addition to binary data (1-bit data) indicating whether, for example, the device 20 which is a sensor, has detected (on) or has not detected (off) a certain object. Analog data that the device communication management unit 10 can transmit and receive with respect to the device 20 is, for example, communication properties, device parameters and identification data (identification information) of the device 20. That is, the device communication management unit 10 can transmit and receive data ((A) binary data (1-bit data) larger than 1 bit which is on/off information and (B) other data including data related to communication properties, device parameters, and identification information of the device 20) to and from the device 20.

Here, the device communication management unit 10 can transmit and receive only binary data which is on/off information to and from the device 20. In the following description, "communication for transmitting and receiving only binary data (1-bit data) which is on/off information" may be called communication in a "first mode" in some cases in order to distinguish it from a case in which the device communication management unit 10 performs "communication for transmitting and receiving data larger than 1 bit" with the device 20. In addition, when the device communication management unit 10 performs "communication for transmitting and receiving data larger than 1 bit" with the device 20, it may be called communication in a "second mode."

For example, the device 20 is an input instrument such as a sensor or an output instrument such as an actuator. The actuator converts an input to a physical motion and is actively activated or driven.

Here, in the following description, a device that can communicate with the device communication management unit 10 only in the first mode in which "only 1-bit data is transmitted and received" in the control system 1 may be called a "device 20(S)" in order to distinguish it from a device that can communicate with the device communication management unit 10 in the second mode in which "data larger than 1 bit is transmitted and received." In addition, a device that can communicate with the device communication management unit 10 in the second mode in which "data larger than 1 bit is transmitted and received" in the control system 1 may be called a "device 20(C)." The device 20(S) is a general (standard) device in the related art and transmits and receives only binary data which is on/off information. The device 20(C) is an intelligent device (specifically, a device that can communicate with the device communication management unit 10). The device 20(C) transmits and receives data ((A) binary data (1-bit data) larger than 1 bit which is on/off information and (B) other data including data related to communication properties, device parameters, and identification information of the device 20).

Here, in the device communication port 110 to which the device 20(S) is connected, since it is not possible to acquire analog data such as identification information of the device 20(S) from the device 20(S), the device communication management unit 10 does not perform a comparison process to be described below. That is, the device communication management unit 10 does not perform a comparison process for the device communication port 110 that communicates with the device 20 in the first mode.

The device 20 (in particular, the device 20(C)) stores identification information such as its "vendor name" and "name of the type (device name)." Such identification information can be acquired by the device communication management unit 10 when the device communication management unit 10 and the device 20 (in particular, the device 20(C)) perform communication in the second mode.

### (Control system)

An overview of the devices (the device communication management unit 10, the device 20, the host controller 40, and the support tool 60) included in the control system 1 has been described above with reference to Fig. 2. Here, an overview of the entire control system 1 will be arranged as follows.

The control system 1 is a master-slave control system that includes the host controller 40 (controller) as a master device and the device communication management unit 10 (slave device) which is connected to the host controller 40 via the field network 50 (network) and includes the device communication port 110 to which the device 20 is connected. The control system 1 includes a storage unit 140 (in particular, the configuration setting information table 141) configured to store configuration information (information stored in the configuration setting information table 141) including identification information of the device 20 (registered device) scheduled to be connected to the device communication port 110, a device communication reception processing unit 102 (acquisition unit) configured to acquire identification information of the device 20 from the device 20 (actual device) connected to the device communication port 110, a comparison unit 104 configured to compare the acquired identification information (identification information of an actual device) of the device communication reception processing unit 102 with identification information (identification information of a registered device) included in the configuration information, and a notification unit 61 configured to, when the comparison unit 104 determines that the acquired identification information (identification information of an actual device) of the device communication reception processing unit 102 and identification information (identification information of a registered device) included in the configuration information do not match, notify the user of a name of the type of the device (registered device) scheduled to be connected to the device communication port 110.

According to the above configuration, when it is determined that identification information of the device 20 (actual device) connected to the device communication port 110 and identification information of the device 20 (registered device) scheduled to be connected to the device communication port 110 do not match, the notification unit 61 notifies the user of the name of the type of the device 20 scheduled to be connected to the device communication port 110.

Therefore, when the control system 1 notifies the user of the name of the type of the device 20 (registered device) scheduled to be connected to the device communication port 110, there is an effect that the user can easily ascertain the device 20 (registered device) to be connected to the device communication port 110.

### (Device communication management unit and support tool)

The overview of the control system 1 has been described above. Next, configurations and processes of the device communication management unit 10 and the support tool 60 included in the control system 1 will be described in detail with reference to Fig. 1 and the like.

### (Details of device communication management unit)

Fig. 1 is a block diagram showing a main part configuration of the device communication management unit 10 and the support tool 60 included in the control system 1. The device communication management unit 10 shown in Fig. 1 has a configuration that includes a device communication control unit 100, the device communication port 110, the upper-level communication port 120, an upper-level communication control unit 130, and the storage unit 140. Here, in order to ensure simplicity of description, components that are not directly related to the present embodiment are omitted in the description and the block diagram. However, according to actual implementation, the device communication management unit 10 may include the omitted components.

The device communication port 110 is an interface to which a transmission cable for communication with the device 20 through the device communication cable 30 is connected. The upper-level communication port 120 is an interface to which a transmission cable for communication with the host controller 40 via the field network 50 is connected.

The upper-level communication control unit 130 collectively controls communication with the host controller 40 via the field network 50. The upper-level communication control unit 130 includes a field bus control unit 131, an upper-level communication reception processing unit 132, and an upper-level communication transmission processing unit 133.

The field bus control unit 131 manages data transmission via the field network 50. The upper-level communication reception processing unit 132 receives an upper-level communication frame transmitted from the host controller 40 via the field network 50, decodes it into data, and outputs the data to the field bus control unit 131. The upper-level communication transmission processing unit 133 regenerates an upper-level communication frame from the data output from the field bus control unit 131 and re-transmits (forward) it via the field network 50. The field bus control unit 131 transmits and receives data to and from the host controller 40 at predetermined control intervals via the field network 50 in cooperation with the upper-level communication reception processing unit 132 and the upper-level communication transmission processing unit 133.

The upper-level communication control unit 130 transmits an IO map showing how the device 20 (for example, data corresponding to data output from the device 20) is allocated to a memory space and an I/O space to the host controller 40 (via the field network 50).

The device communication control unit 100 collectively controls functions of the device communication management unit 10 related to communication with the device 20. The device communication control unit 100 shown in the drawing includes a device communication processing unit 101, the device communication reception processing unit 102, a device communication transmission processing unit 103, and the comparison unit 104 as functional blocks.

The device communication processing unit 101 controls communication with the device 20 and includes the device communication reception processing unit 102 and the device communication transmission processing unit 103. The device communication processing unit 101 controls whether to communicate in the first mode or communicate in the second mode with the connected devices 20(1), 20(2), ···, 20(n) for the device communication ports 110(1), 110(2), ···, 110(n).

The device communication processing unit 101 acquires comparison results (comparison pass/ comparison fail) in the device communication ports 110(1), 110(2), ···, 110(n) from the comparison unit 104. When the device communication processing unit 101 acquires a comparison result indicating that "the device 20 (registered device) scheduled to be connected and the device 20 (actual device) that is actually connected match (comparison pass)" for a certain device communication port 110 from the comparison unit 104, it performs the following process. That is, when the device communication processing unit 101 acquires a comparison result of comparison pass, it maintains communication in the certain device communication port 110. When the device communication processing unit 101 acquires a comparison result indicating that "the device 20 (registered device) scheduled to be connected and the device 20 (actual device) that is actually connected do not match (comparison fail)" for a certain device communication port 110 from the comparison unit 104, it performs the following process. That is, when the device communication processing unit 101 acquires a comparison result of comparison fail, it stops communication in the certain device communication port 110. Here, when a comparison process of the comparison unit 104 is not performed for a certain device communication port 110, the device communication processing unit 101 maintains communication in the certain device communication port 110.

The device communication reception processing unit 102 receives the following data from the device communication ports 110(1), 110(2), ···, 110(n) through the device communication cable 30. That is, the device communication reception processing unit 102 receives data output from the devices 20(1), 20(2), ···, 20(n) connected to the device communication ports 110(1), 110(2), ···, 110(n).

The data output from the device 20 includes the following data in addition to 1-bit data (for example, binary data such as on/off information indicating whether the device 20 which is a sensor has detected (on) or has not detected (off) a certain object). That is, analog data related to communication properties, device parameters, identification data (identification information) and the like of the device 20 is included. The device communication reception processing unit 102 receives the 1-bit data and the analog data from the device 20.

The device communication transmission processing unit 103 transmits the following data from the device communication ports 110(1), 110(2), ···, 110(n) through the device communication cable 30. That is, the device communication transmission processing unit 103 transmits input data such as a control instruction from the host controller 40 to the devices 20(1), 20(2), ···, 20(n) connected to the device communication ports 110(1), 110(2), ···, 110(n).

The data transmitted from the device communication transmission processing unit 103 to the device 20 includes analog data related to other control for the device 20 in addition to 1-bit data (for example, command data for activating (on) and inactivating (off) the device 20 which is an actuator).

The comparison unit 104 can perform a comparison process of determining whether the device 20 (registered device) scheduled to be connected and the device 20 (actual device) that is actually connected match for the device communication ports 110(1), 110(2), ···, 110(n).

The comparison unit 104 acquires the following information for the device communication ports 110(1), 110(2), ···, 110(n) with reference to, for example, the configuration setting information table 141 stored in the storage unit 140. That is, the comparison unit 104 acquires identification information of the device 20 (registered device) scheduled to be connected to the device communication ports 110(1), 110(2), ···, 110(n).

In addition, the comparison unit 104 acquires identification information of the device 20 (actual device) that is actually connected to the device communication ports 110(1), 110(2), ···, 110(n) from the device communication reception processing unit 102. As described above, the device communication reception processing unit 102 can receive analog data including identification information of the device 20 from the device 20.

Then, the comparison unit 104 performs the following process for the device communication ports 110(1), 110(2), ···, 110(n). That is, the comparison unit 104 performs a comparison process of determining whether identification information of the device 20 (registered device) scheduled to be connected and identification information of the device 20 (actual device) that is actually connected match for the device communication ports 110(1), 110(2), ···, 110(n).

The comparison unit 104 performs one of the following two determinations between a registered device and an actual device for each device communication port 110. That is, the comparison unit 104 determines whether "a vendor ID, a device ID, and a revision" match between the registered device and the actual device for each device communication port 110 (first comparison pattern). In addition, the comparison unit 104 determines whether "a vendor ID, a device ID, a revision, and a serial No." match between the registered device and the actual device for each device communication port 110 (second comparison pattern).

The comparison unit 104 notifies the device communication processing unit 101 and the upper-level communication control unit 130 of an execution result (comparison pass/ comparison fail) of a comparison process related to each of the device communication ports 110(1), 110(2), ···, 110(n). When it is determined that comparison has failed (identification information of the registered device and identification information of the actual device do not match), the comparison unit 104 instructs the upper-level communication control unit 130 to transmit the following information to the support tool 60 (notify the notification unit 61 thereof). That is, when it is determined that comparison has failed, the comparison unit 104 transmits identification information (in particular, a name of the type and a vendor name of the registered device) of the registered device to the support tool 60 (notify the notification unit 61 thereof). That is, the comparison unit 104 transmits identification information (in particular, a name of the type and a vendor name of the registered device) that is not used for the comparison process, which is different from identification information (a vendor ID, a device ID, a revision, and a serial No.) used for the comparison process to the support tool 60 (notify the notification unit 61 thereof). The comparison unit 104 may transmit not only identification information of the registered device for each device communication port 110 but also identification information of the actual device to the support tool 60 (notify the notification unit 61 thereof).

Here, the comparison unit 104 performs or does not perform a comparison process for the device communication ports 110(1), 110(2), ···, 110(n). The comparison unit 104 can selectively perform a comparison process for the device communication ports 110(1), 110(2), ···, 110(n). In other words, the comparison unit 104 need not perform a comparison process for a certain device communication port 110 among the device communication ports 110(1), 110(2), ···, 110(n) and can perform a comparison process for other device communication ports 110. For example, the comparison unit 104 can perform a comparison process for the device communication ports 110(1), 110(3), ···, 110(n) and not perform a comparison process for the device communication port 110(2).

In addition, when a certain device communication port 110 transmits and receives only binary data which is on/off information to and from the device 20, the comparison unit 104 does not perform a comparison process for the certain device communication port 110. In other words, when a certain device communication port 110 performs communication with the device 20 in the first mode between the device 20, the comparison unit 104 does not perform a comparison process for the certain device communication port 110. That is, the comparison unit 104 does not perform a comparison process for the device communication port 110 to which the device 20(S) is connected.

In the storage unit 140, various types of data that the device communication management unit 10 uses are stored. That is, the storage unit 140 stores (1) a control program, (2) an OS program, (3) an application program for executing various functions which are executed by the device communication management unit 10, and (4) various types of data to be read when the application program is executed. The above (1) to (4) data is stored in a non-volatile storage device, for example, a read only memory (ROM), a flash memory, an erasable programmable ROM (EPROM), an EEPROM (registered trademark) (electrically EPROM), and a hard disc drive (HDD). In addition, the storage unit 140 stores the configuration setting information table 141.

In the configuration setting information table 141, configuration information (configuration data) including identification information of the device 20 scheduled to be connected through the device communication cable 30 for the device communication ports 110(1), 110(2), ···, 110(n) is stored. Identification information of the device 20 is, for example, a "vendor ID," a "device ID," a "serial No.," a "revision (for example, an IO-Link (registered trademark) revision)," a "vendor name," and a "name of the type (device name)" of the device 20. The "name of the type" refers to a name for distinguishing a type (model, type) of a device.

Within identification information of the device 20 stored in the configuration setting information table 141, identification information to be subjected to a comparison process of the comparison unit 104 is at most a "vendor ID," a "device ID," a "revision (for example, an IO-Link revision)," and a "serial No.". Within identification information of the device 20, a "vendor name" and a "name of the type (device name)" are not identification information to be subjected to a comparison process by the comparison unit 104.

### (Device comparison process)

When the device 20 is connected to the device communication port 110 through the device communication cable 30, the comparison unit 104 performs a comparison process. When the device 20 (actual device) that is actually connected to the device communication port 110 does not match the device 20 (registered device) scheduled to be connected to the device communication port 110, the comparison unit 104 determines that comparison has failed. Then, when the comparison unit 104 determines that "comparison has failed," the device communication processing unit 101 stops communication in the device communication port 110.

Here, the comparison unit 104 compares a "vendor ID," a "device ID," and a "revision" between the device 20 (actual device) that is actually connected to the device communication port 110 and the device 20 (registered device) scheduled to be connected to the device communication port 110 (first comparison pattern).

In addition, the comparison unit 104 may compare a "vendor ID," a "device ID," a "revision," and a "serial No." between the device 20 (actual device) that is actually connected to the device communication port 110 and the device 20 (registered device) scheduled to be connected to the device communication port 110 (second comparison pattern).

Here, as described above, the comparison unit 104 performs a comparison process for the device communication ports 110(1), 110(2), ···, 110(n). For example, the comparison unit 104 compares a "vendor ID," a "device ID," and a "revision" between the device 20 (actual device) that is actually connected to the device communication port 110(1) and the device 20 (registered device) scheduled to be connected to the device communication port 110(1). In addition, the comparison unit 104 compares a "vendor ID," a "device ID," and a "revision" between the device 20 (actual device) that is actually connected to the device communication port 110(2) and the device 20 (registered device) scheduled to be connected to the device communication port 110(2). The comparison unit 104 can perform a comparison process for the device communication ports 110(1), 110(3), 110(4), ···, 110(n) and not perform a comparison process for the device communication port 110(2).

Here, when a comparison process is performed in the first comparison pattern, the comparison unit 104 does not select a "serial No." as a comparison target. Therefore, even if the device 20 (that is, the device 20 whose "vendor ID," "device ID," and "revision" are the same as those of the registered device) of the same type as the registered device is connected to the device communication port 110, the comparison unit 104 determines that comparison has failed.

### (Details of support tool)

The support tool 60 includes the notification unit 61. The notification unit 61 can notify the user of a result of a comparison process (a comparison process for each device communication port 110 between the registered device and the actual device) executed in the device communication management unit 10. Here, when it is determined that "comparison has failed" (identification information of the registered device and identification information of the actual device do not match)" as a result of the comparison process, the notification unit 61 notifies the user of identification information of the registered device (in particular, a vendor name, a name of the type, and the like of the registered device). When it is determined that comparison has failed, the notification unit 61 may additionally notify the user of a "serial No.," and a "revision (for example, an IO-Link revision)" of the registered device in addition to a "vendor name" and a "name of the type." When these are notified, the user can easily ascertain the correct device (registered device).

For example, the device communication management unit 10 performs a comparison process (a comparison process for each device communication port 110 between the registered device and the actual device), and transmits a result of the comparison process to the support tool 60 via the field network 50 (and the host controller 40). When it is determined that comparison has failed (identification information of the registered device and identification information of the actual device do not match), the device communication management unit 10 transmits identification information of the registered device to the support tool 60 via the field network 50 (and the host controller 40).

Then, the support tool 60 receives a result of the comparison process from the device communication management unit 10 via the field network 50 (and the host controller 40). In addition, the support tool 60 receives identification information including a "vendor name, a name of the type, a serial No., a revision" and the like of the registered device from the device communication management unit 10 via the field network 50 (and the host controller 40).

The notification unit 61 notifies the user of "a result of the comparison process, and identification information of the registered device (in particular, "a vendor name, a name of the type, a serial No., and a revision" of the registered device)" received by the support tool 60 from the device communication management unit 10. That is, the notification unit 61 notifies the user of "a name of the type and a vendor name" which is identification information that is not a comparison target when the comparison unit 104 performs the comparison process as one piece of identification information of the registered device. The notification unit 61 further notifies the user of only a name of the type of the registered device for each device communication port 110. Here, as described above, the comparison unit 104 uses the name of the type as identification information for comparison between the registered device and the actual device when a "vendor ID, a device ID, and a revision (and a serial No.)" are compared.

Here, the support tool 60 including the notification unit 61 (or the HMI 80 including the notification unit 61) may receive not only identification information of the registered device for each device communication port 110 but also identification information of the actual device from the device communication management unit 10. The support tool 60 (or the HMI 80) may notify the user of "identification information of the actual device for each device communication port 110" together with "identification information of the registered device for each device communication port 110" received from the device communication management unit 10.

### (Method of registering identification information)

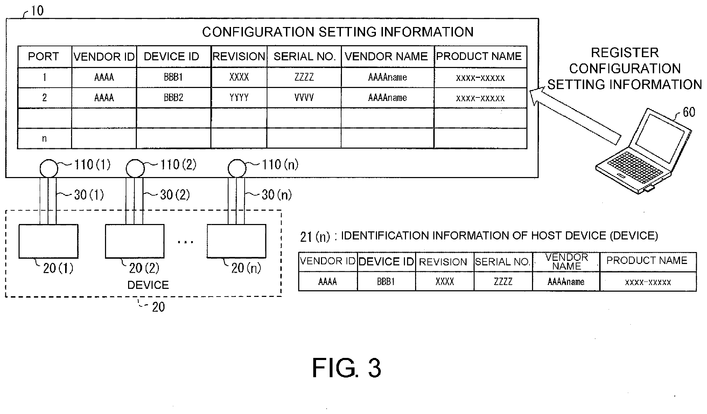

Fig. 3 is a diagram explaining a method of registering "identification information of the devices 20(1), 20(2), ···, 20(n) scheduled to be connected to the device communication ports 110(1), 110(2), ···, 110(n)" (configuration information) in the control system 1 in the device communication management unit 10.

The device communication management unit 10 performs a comparison process of checking whether the device 20 that is actually connected to a certain device communication port 110 is an intended device 20 (the device 20 scheduled to be connected to the certain device communication port 110).

In order to cause the device communication management unit 10 to perform the comparison process, the user registers identification information of the device 20 scheduled to be connected to the certain device communication port 110 of the device communication management unit 10 in advance using the support tool 60.

That is, first, the user inputs "identification information of the devices 20(1), 20(2), ···, 20(n) scheduled to be connected to the device communication ports 110(1), 110(2), ···, 110(n)" to the support tool 60. Then, the support tool 60 transmits identification information of the device 20 that is manually input by the user for each device communication port 110 to the device communication management unit 10. The device communication management unit 10 stores "identification information of the device 20 that is manually input by the user for each device communication port 110" from the support tool 60 in the configuration setting information table 141.

When identification information of the registered device is set in the support tool 60 (or the HMI 80), the user sets information related to a "vendor name" and a "name of the type (device name)" of the registered device in addition to "a vendor ID, a device ID, and a revision (and a serial No.)" of the registered device.

As described above, in the control system 1, identification information included in the configuration information (information stored in the configuration setting information table 141) is information that is registered in advance by the user.

According to the above configuration, the control system 1 has an effect that it is possible to notify the user of a name of the type of the device 20 (registered device) scheduled to be connected to the device communication port 110 using the configuration information that is registered in advance by the user.

### (Method of notifying of a comparison result in a device communication management unit of the related art)

A device communication management unit 9 of the related art can display identification information (at least one of a "vendor ID," a "device ID," a "serial No.," and a "revision (for example, an IO-Link revision)") of the device 20 scheduled to be connected to the device communication port 110 as numerical values.

However, "identification information of the device 20 scheduled to be connected to the device communication port 110" that the device communication management unit 9 of the related art displays is numerical values (numerical values indicating at least one of a "vendor ID," a "device ID," a "serial No.," and a "revision (for example, an IO-Link revision)"). Therefore, it is difficult for the user to ascertain a device that is actually "the device 20 scheduled to be connected to the device communication port 110." That is, the user needs to identify "the device 20 scheduled to be connected to the device communication port 110" from only information displayed as numerical values. Therefore, it is difficult for the user to ascertain, for example, what type of device 20 a type of the device 20 connected to the device communication port 110 has been misrecognized as. The user needs to search for information (numbers) displayed as numerical values for a type of the device 20 and identify the type.

### (Method of notifying of a comparison result in a device communication management unit according to an embodiment of the present invention)

The notification unit 61 of the support tool 60 (or the HMI 80) displays identification information of the registered device (the device 20 scheduled to be connected to the device communication port 110) and identification information of the actual device (the device 20 that is actually connected to the device communication port 110) as a "name of the type (device name)." The notification unit 61 the device communication management unit 10 included in the support tool 60 (or the HMI 80) can notify the user of identification information such as "a vendor name, a name of the type (device name), a revision, and a serial No." of the registered device and the actual device in the device communication management unit 10. Therefore, the user can easily ascertain which device is a "correct device (the device 20 scheduled to be connected to the device communication port 110) using such identification information.

The above description has focused on an example in which, "when it is determined that comparison has failed, the comparison unit 104 transmits identification information of the registered device (in particular, a name of the type of the registered device) to the support tool 60 (notifies the notification unit 61 thereof)." However, when the comparison unit 104 determines that comparison has failed, it is not necessary for the comparison unit 104 to transmit identification information of the registered device to the support tool 60. That is, the device communication management unit 10 may transmit independently identification information of the registered device (and the actual device) to the support tool 60 (or the HMI 80) including the notification unit 61. In addition, the support tool 60 (or the HMI 80) may request the device communication management unit 10 to transmit identification information of the registered device (and the actual device).

For example, the support tool 60 (the notification unit 61) that has received a determination result of comparison fail may acquire configuration information (in particular, identification information of the registered device for each device communication port 110) stored in the configuration setting information table 141 from the device communication management unit 10 through the host controller 40 (the field network 50). That is, the support tool 60 (the HMI 80) including the notification unit 61 may output a message for requesting transmission of identification information of the registered device for each device communication port 110 (in particular, a name of the type or the like) to the device communication management unit 10 through the host controller 40 (the field network 50). The device communication management unit 10 that has received the message refers to the configuration setting information table 141 and transmits the acquired "identification information of the registered device for each device communication port 110 (in particular, a name of the type or the like)" to the support tool 60 (the HMI 80).

Here, the support tool 60 including the notification unit 61 (or the HMI 80 including the notification unit 61) may receive not only identification information of the registered device for each device communication port 110 but also identification information of the actual device from the device communication management unit 10. The support tool 60 (or the HMI 80) may notify the user of "identification information of the actual device for each device communication port 110" together with "identification information of the registered device for each device communication port 110" received from the device communication management unit 10.

Here, the device 20 (in particular, the device 20(C)) stores identification information such as its "vendor name" and "name of the type (device name)." The support tool 60 including the notification unit 61 (or the HMI 80 including the notification unit 61) may output a message for requesting transmission of identification information such as a "vendor name" and a "name of the type (device name)" of the actual device to the device communication management unit 10. The device communication management unit 10 that has received the message performs communication in the second mode with the device 20 (in particular, the device 20(C)) connected to the device communication port 110, and acquires identification information of the device 20 (actual device) for each device communication port 110. The device communication management unit 10 transmits identification information of the actual device (including a vendor name and a name of the type (device name)) for each device communication port 110 to the support tool 60 (or the HMI 80). The notification unit 61 included in the support tool 60 (or the HMI 80) notifies the user of "identification information of the actual device (in particular, a vendor name and a name of the type) for each device communication port 110" acquired from the device communication management unit 10 together with "identification information of the registered device for each device communication port 110 (in particular, a vendor name and a name of the type)." Therefore, the user can simply and easily ascertain "which device is a correct device (registered device)," and "which device is erroneously connected" for each device communication port 110.

### (Variations related to a device configured to perform a display process and a comparison process)

The control system 1 has been described above according to the following example. That is, an example in which "the device communication management unit 10 includes the comparison unit 104 configured to compare identification information of the device 20 (registered device) scheduled to be connected for each device communication port 110 and identification information of the device 20 (actual device) that is actually connected, and the support tool 60 includes the notification unit 61 configured to, when a name of the type of the device (registered device) scheduled to be connected to the device communication port 110 is determined as comparison fail by the comparison unit 104, notify the user thereof' has been described.

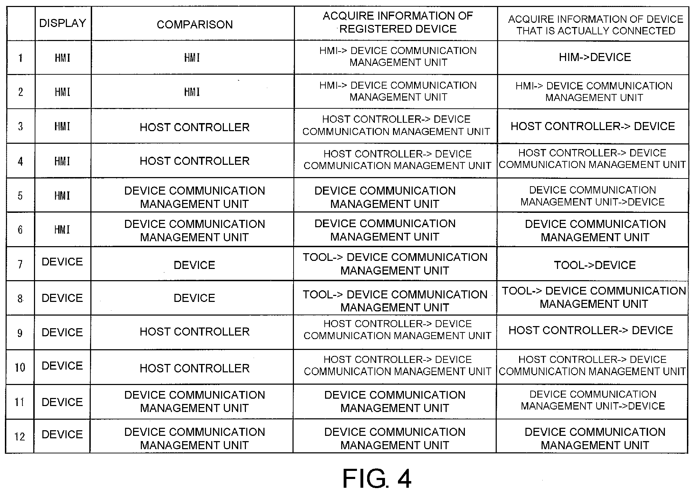

However, in the control system 1, it is not necessary for the device communication management unit 10 to include "the comparison unit 104 configured to perform a comparison process (determination of whether registered information and actual connection information match, that is, determine whether identification information of the registered device and identification information of the actual device match)." In addition, it is not necessary for the support tool 60 to include the notification unit 61 configured to perform a "display process (notify of a name of the type of the registered device)." Examples of possible combinations of devices configured to perform the display process and the comparison process will be described below with reference to Fig. 4 to Fig. 10.

That is, in the control system 1, the comparison unit 104 is included in at least one of the host controller 40, the device communication management unit 10, the support tool 60 or the HMI 80 (external device) connected to the host controller 40 and the support tool 60 or the HMI 80 (external device) connected to the device communication management unit 10.

According to the above configuration, the comparison unit 104 is included in at least one of the host controller 40, the device communication management unit 10, the support tool 60 or the HMI 80 (external device) connected to the host controller 40, and the support tool 60 or the HMI 80 (external device) connected to the device communication management unit 10. Therefore, the control system 1 has an effect that, on at least one of the host controller 40, the device communication management unit 10, the support tool 60 or the HMI 80 (external device) connected to the host controller 40, and the support tool 60 or the HMI 80 (external device) connected to the device communication management unit 10, identification information (identification information of the actual device) that can be acquired by the device communication reception processing unit 102 and identification information (identification information of the registered device) included in the configuration information are compared, and a comparison result (in particular, a name of the type of the registered device) can be displayed.

In addition, in the control system 1, the notification unit 61 displays a name of the type of the device 20 (registered device) scheduled to be connected to the device communication port 110 on at least one of the host controller 40, the device communication management unit 10, the support tool 60 or the HMI 80 (external device) connected to the host controller 40, and the support tool 60 or the HMI 80 (external device) connected to the device communication management unit 10.

According to the above configuration, the control system 1 has an effect that a name of the type of the device 20 (registered device) scheduled to be connected to the device communication port 110 is displayed on at least one of the host controller 40, the device communication management unit 10, the support tool 60 or the HMI 80 (external device) connected to the host controller 40, and the support tool 60 or the HMI 80 (external device) connected to the device communication management unit 10, and thus it is possible to notify the user thereof.

Fig. 4 is a table showing examples of execution subjects of a display process and a comparison process in the control system 1. That is, in Fig. 4, in the control system 1, examples of execution subjects of a display process, a comparison process (determination of whether registered information and actual connection information match), a process of acquiring registered information, a process of acquiring actual connection information are shown in a table format.

In the table shown in Fig. 4, the first row shows a configuration in which the HMI 80 performs a display process and the HMI 80 performs a comparison process (determination of whether registered information and actual connection information match). In the configuration in the first row, the HMI 80 makes an inquiry to the device communication management unit 10 regarding acquisition of identification information of the registered device (device scheduled to be connected) for each device communication port 110 of the device communication management unit 10. The device communication management unit 10 notifies the HMI 80 of configuration information stored in the configuration setting information table 141 (identification information of the registered device for each device communication port 110). In addition, the HMI 80 makes an inquiry to the device 20 regarding acquisition of identification information of the actual device (the device 20 that is actually connected to each device communication port 110) for each device communication port 110 of the device communication management unit 10. That is, the HMI 80 causes the device communication management unit 10 to acquire identification information of the device 20 from the device 20, and thus acquires identification information of the actual device for each device communication port 110.

In the table shown in Fig. 4, the second row shows a configuration in which the HMI 80 performs a display process and the HMI 80 performs a comparison process (determination of whether registered information and actual connection information match). In the configuration in the second row, the HMI 80 makes an inquiry to the device communication management unit 10 regarding acquisition of identification information of the registered device (device scheduled to be connected) for each device communication port 110. The device communication management unit 10 notifies the HMI 80 of configuration information (identification information of the registered device for each device communication port 110) stored in the configuration setting information table 141. In addition, the HMI 80 makes an inquiry to the device communication management unit 10 regarding acquisition of identification information of the actual device (the device 20 that is actually connected to that port) for each device communication port 110. The device communication management unit 10 notifies the HMI 80 of "identification information 142 of the actual device for each device communication port 110" acquired from the device 20 that is actually connected to the device communication port 110.

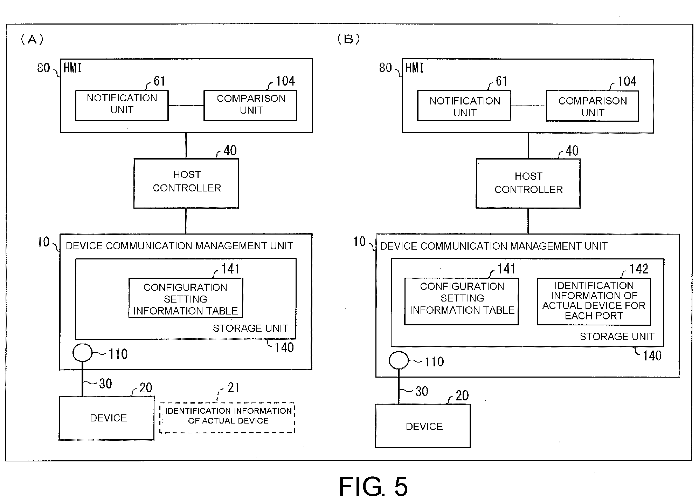

Fig. 5 is a diagram showing an example of execution subjects of a display process and a comparison process in the control system 1. (A) of Fig. 5 shows an example in which "the HMI 80 includes the notification unit 61 configured to perform a display process and the comparison unit 104 configured to perform a comparison process." In (A) of Fig. 5, the HMI 80 acquires identification information of "the registered device for each device communication port 110" from the configuration setting information table 141 of the device communication management unit 10 and acquires "identification information 21 of the actual device for each device communication port 110" from the device 20. The configuration shown in (A) of Fig. 5 corresponds to the configuration shown in the first row in the table shown in Fig. 4. (B) of Fig. 5 shows an example in which "the HMI 80 includes the notification unit 61 configured to perform a display process and the comparison unit 104 configured to perform a comparison process." The HMI 80 in (B) of Fig. 5 acquires "the registered device for each device communication port 110" and "identification information of the actual device for each device communication port 110" from the configuration setting information table 141 of the device communication management unit 10 and "the identification information 142 of the actual device for each device communication port 110." The configuration shown in (B) of Fig. 5 corresponds to the configuration shown in the second row in the table shown in Fig. 4.

In the table shown in Fig. 4, the third row shows a configuration in which the HMI 80 performs a display process and the host controller 40 performs a comparison process (determination of whether registered information and actual connection information match). In the configuration in the third row, the host controller 40 makes an inquiry to the device communication management unit 10 regarding acquisition of identification information of the registered device (device scheduled to be connected) for each device communication port 110. The device communication management unit 10 notifies the host controller 40 of configuration information (identification information of the registered device for each device communication port 110) stored in the configuration setting information table 141. In addition, the host controller 40 makes an inquiry to the device 20 regarding acquisition of identification information of the actual device (the device 20 that is actually connected to that port) for each device communication port 110. That is, the host controller 40 causes the device communication management unit 10 to acquire identification information of the device 20 from the device 20 and thus acquires identification information of the actual device for each device communication port 110. The HMI 80 notifies the user of a result of the comparison process performed by the host controller 40.

In the table shown in Fig. 4, the fourth row shows a configuration in which the HMI 80 performs a display process and the host controller 40 performs a comparison process (determination of whether registered information and actual connection information match). In the configuration in the fourth row, the host controller 40 makes an inquiry to the device communication management unit 10 regarding acquisition of identification information of the registered device (device scheduled to be connected) for each device communication port 110. The device communication management unit 10 notifies the host controller 40 of configuration information (identification information of the registered device for each device communication port 110) stored in the configuration setting information table 141. In addition, the host controller 40 makes an inquiry to the device communication management unit 10 regarding acquisition of identification information of the actual device (the device 20 that is actually connected to that port) for each device communication port 110. The device communication management unit 10 notifies the host controller 40 of "the identification information 142 of the actual device for each device communication port 110" acquired from the device 20 that is actually connected to the device communication port 110. The HMI 80 notifies the user of a result of the comparison process performed by the host controller 40.

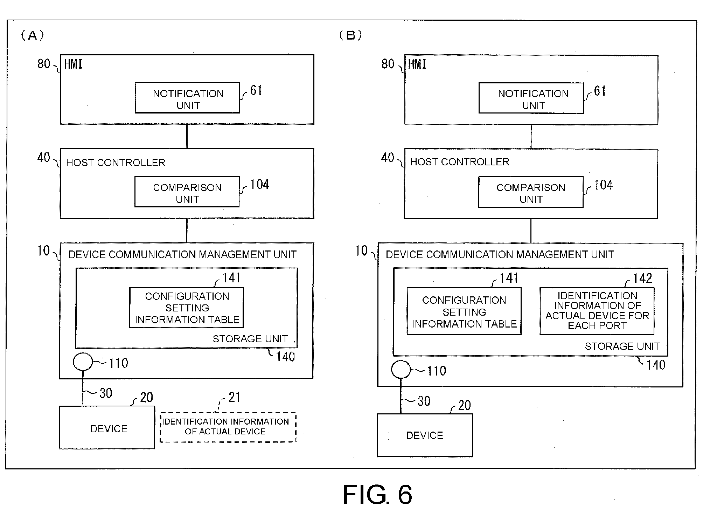

Fig. 6 is a diagram showing an example of execution subjects of a display process and a comparison process in the control system 1 that is different from the example shown in Fig. 5. (A) of Fig. 6 shows an example in which "the HMI 80 includes the notification unit 61 configured to perform a display process and the host controller 40 includes the comparison unit 104 configured to perform a comparison process." The host controller 40 in (A) of Fig. 6 acquires identification information of "the registered device for each device communication port 110" from the configuration setting information table 141 of the device communication management unit 10 and acquires "the identification information 21 of the actual device for each device communication port 110" from the device 20. The configuration shown in (A) of Fig. 6 corresponds to the configuration shown in the third row in the table shown in Fig. 4. (B) of Fig. 6 shows an example in which "the HMI 80 includes the notification unit 61 configured to perform a display process and the host controller 40 includes the comparison unit 104 configured to perform a comparison process." The host controller 40 in (B) of Fig. 6 acquires "the registered device for each device communication port 110" and "identification information of the actual device for each device communication port 110" from the configuration setting information table 141 of the device communication management unit 10 and "the identification information 142 of the actual device for each device communication port 110." The configuration shown in (B) of Fig. 6 corresponds to the configuration shown in the fourth row in the table shown in Fig. 4.

In the table shown in Fig. 4, the fifth row shows a configuration in which the HMI 80 performs a display process and the device communication management unit 10 performs a comparison process (determination of whether registered information and actual connection information match). In the configuration in the fifth row, regarding acquisition of identification information of the registered device (device scheduled to be connected) for each device communication port 110, "identification information of the registered device" that the device communication management unit 10 itself stores is used. That is, the device communication management unit 10 refers to the configuration setting information table 141 and acquires "identification information of the registered device for each device communication port 110." In addition, the device communication management unit 10 makes an inquiry to the device 20 regarding acquisition of identification information of the actual device (the device 20 that is actually connected to that port) for each device communication port 110. That is, the device communication management unit 10 acquires identification information of the device 20 from the device 20 that is actually connected to the device communication port 110. The HMI 80 notifies the user of a result of the comparison process performed by the device communication management unit 10.

In the table shown in Fig. 4, the sixth row shows a configuration in which the HMI 80 performs a display process and the device communication management unit 10 performs a comparison process (determination of whether registered information and actual connection information match). In the configuration in the sixth row, regarding acquisition of identification information of the registered device (device scheduled to be connected) for each device communication port 110, "identification information of the registered device" that the device communication management unit 10 itself stores is used. That is, the device communication management unit 10 refers to the configuration setting information table 141 and acquires "identification information of the registered device for each device communication port 110." In addition, regarding acquisition of identification information of the actual device (the device 20 that is actually connected to that port) for each device communication port 110, "identification information of the actual device" that the device communication management unit 10 itself stores is used. That is, the device communication management unit 10 refers to "the identification information 142 of the actual device for each device communication port 110" acquired from the device 20 that is actually connected to the device communication port 110 and acquires "identification information of the actual device." The HMI 80 notifies the user of a result of the comparison process performed by the device communication management unit 10.

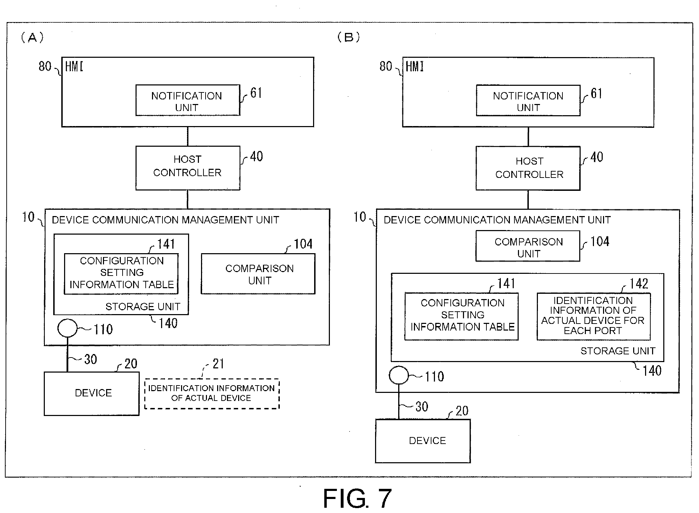

Fig. 7 is a diagram showing an example of execution subjects of a display process and a comparison process in the control system 1 that is different from the examples shown in Fig. 5 and Fig. 6. (A) of Fig. 7 shows an example in which "the HMI 80 includes the notification unit 61 configured to perform a display process and the device communication management unit 10 includes the comparison unit 104 configured to perform a comparison process." In (A) of Fig. 7, the device communication management unit 10 acquires identification information of "the registered device for each device communication port 110" with reference to the configuration setting information table 141 and acquires "the identification information 21 of the actual device for each device communication port 110" from the device 20. The configuration shown in (A) of Fig. 7 corresponds to the configuration shown in the fifth row in the table shown in Fig. 4. (B) of Fig. 7 shows an example in which "the HMI 80 includes the notification unit 61 configured to perform a display process and the device communication management unit 10 includes the comparison unit 104 configured to perform a comparison process." In (B) of Fig. 7, the device communication management unit 10 acquires "the registered device for each device communication port 110" and "identification information of the actual device for each device communication port 110" with reference to the configuration setting information table 141 and "the identification information 142 of the actual device for each device communication port 110." The configuration shown in (B) of Fig. 7 corresponds to the configuration shown in the sixth row in the table shown in Fig. 4.

In the table shown in Fig. 4, the seventh row shows a configuration in which the support tool 60 performs a display process and the support tool 60 performs a comparison process (determination of whether registered information and actual connection information match). In the configuration in the seventh row, the support tool 60 makes an inquiry to the device communication management unit 10 regarding acquisition of identification information of the registered device (device scheduled to be connected) for each device communication port 110. The device communication management unit 10 notifies the support tool 60 of configuration information (identification information of the registered device for each device communication port 110) stored in the configuration setting information table 141. In addition, the support tool 60 makes an inquiry to the device 20 regarding acquisition of identification information of the actual device (the device 20 that is actually connected to that port) for each device communication port 110. That is, the support tool 60 causes the device communication management unit 10 to acquire identification information of the device 20 from the device 20 and thus acquires identification information of the actual device for each device communication port 110.

In the table shown in Fig. 4, the eighth row shows a configuration in which the support tool 60 performs a display process and the support tool 60 performs a comparison process (determination of whether registered information and actual connection information match). In the configuration in the eighth row, the support tool 60 makes an inquiry to the device communication management unit 10 regarding acquisition of identification information of the registered device (device scheduled to be connected) for each device communication port 110. The device communication management unit 10 notifies the support tool 60 of configuration information (identification information of the registered device for each device communication port 110) stored in the configuration setting information table 141. In addition, the support tool 60 makes an inquiry to the device communication management unit 10 regarding acquisition of identification information of the actual device (the device 20 that is actually connected to that port) for each device communication port 110. The device communication management unit 10 notifies the support tool 60 of "the identification information 142 of the actual device for each device communication port 110" acquired from the device 20 that is actually connected to the device communication port 110.

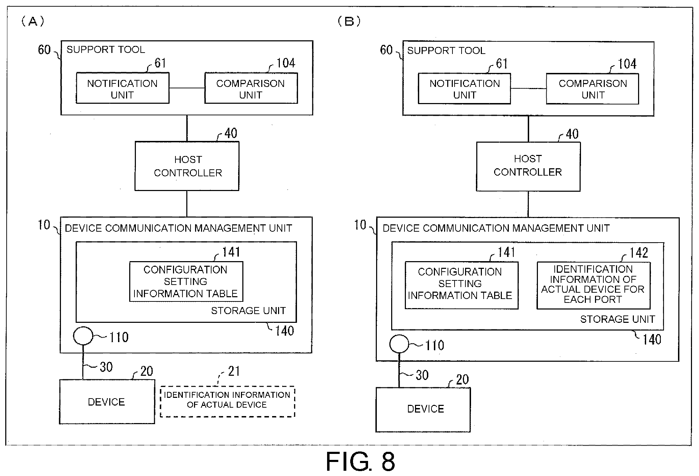

Fig. 8 is a diagram showing an example of execution subjects of a display process and a comparison process in the control system 1 that is different from the examples shown in Fig. 5 to Fig. 7. (A) of Fig. 8 shows an example in which "the support tool 60 includes the notification unit 61 configured to perform a display process and the comparison unit 104 configured to perform a comparison process." The support tool 60 in (A) of Fig. 8 acquires identification information of "the registered device for each device communication port 110" from the configuration setting information table 141 of the device communication management unit 10 and acquires "the identification information 21 of the actual device for each device communication port 110" from the device 20. The configuration shown in (A) of Fig. 8 corresponds to the configuration shown in the seventh row in the table shown in Fig. 4. (B) of Fig. 8 shows an example in which "the support tool 60 includes the notification unit 61 configured to perform a display process and the comparison unit 104 configured to perform a comparison process." The support tool 60 in (B) of Fig. 8 acquires "the registered device for each device communication port 110" and "identification information of the actual device for each device communication port 110" from the configuration setting information table 141 of the device communication management unit 10 and "the identification information 142 of the actual device for each device communication port 110." The configuration shown in (B) of Fig. 8 corresponds to the configuration shown in the eighth row in the table shown in Fig. 4.

In the table shown in Fig. 4, the ninth row shows a configuration in which the support tool 60 performs a display process, and the host controller 40 performs a comparison process (determination of whether registered information and actual connection information match). In the configuration in the ninth row, the host controller 40 makes an inquiry to the device communication management unit 10 regarding acquisition of identification information of the registered device (device scheduled to be connected) for each device communication port 110. The device communication management unit 10 notifies the host controller 40 of configuration information (identification information of the registered device for each device communication port 110) stored in the configuration setting information table 141. In addition, the host controller 40 makes an inquiry to the device 20 regarding acquisition of identification information of the actual device (the device 20 that is actually connected to that port) for each device communication port 110. That is, the host controller 40 causes the device communication management unit 10 to acquire identification information of the device 20 from the device 20 and thus acquires identification information of the actual device for each device communication port 110. The support tool 60 notifies the user of a result of the comparison process performed by the host controller 40.

In the table shown in Fig. 4, the tenth row shows a configuration in which the support tool 60 performs a display process and the host controller 40 performs a comparison process (determination of whether registered information and actual connection information match). In the configuration in the tenth row, the host controller 40 makes an inquiry to the device communication management unit 10 regarding acquisition of identification information of the registered device (device scheduled to be connected) for each device communication port 110. The device communication management unit 10 notifies the host controller 40 of configuration information (identification information of the registered device for each device communication port 110) stored in the configuration setting information table 141. In addition, the host controller 40 makes an inquiry to the device communication management unit 10 regarding acquisition of identification information of the actual device (the device 20 that is actually connected to that port) for each device communication port 110. The device communication management unit 10 notifies the host controller 40 of "the identification information 142 of the actual device for each device communication port 110" acquired from the device 20 that is actually connected to the device communication port 110. The support tool 60 notifies the user of a result of the comparison process performed by the host controller 40.

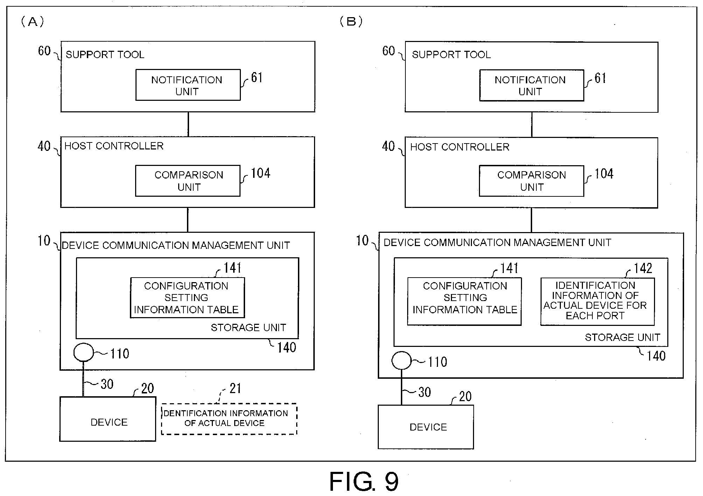

Fig. 9 is a diagram showing an example of execution subjects of a display process and a comparison process in the control system 1 that is different from the examples shown in Fig. 5 to Fig. 8. (A) of Fig. 9 shows an example in which "the support tool 60 includes the notification unit 61 configured to perform a display process and the host controller 40 includes the comparison unit 104 configured to perform a comparison process." The host controller 40 shown in (A) of Fig. 9 acquires identification information of "the registered device for each device communication port 110" from the configuration setting information table 141 of the device communication management unit 10 and acquires "the identification information 21 of the actual device for each device communication port 110" from the device 20. The configuration shown in (A) of Fig. 9 corresponds to the configuration shown in the ninth row in the table shown in Fig. 4. (B) of Fig. 9 shows an example in which "the support tool 60 includes the notification unit 61 configured to perform a display process, and the host controller 40 includes the comparison unit 104 configured to perform a comparison process." The host controller 40 in (B) of Fig. 9 acquires "the registered device for each device communication port 110" and "identification information of the actual device for each device communication port 110" from the configuration setting information table 141 of the device communication management unit 10 and "the identification information 142 of the actual device for each device communication port 110." The configuration shown in (B) of Fig. 9 corresponds to the configuration shown in the tenth row in the table shown in Fig. 4.

In the table shown in Fig. 4, the eleventh row shows a configuration in which the support tool 60 performs a display process and the device communication management unit 10 performs a comparison process (determination of whether registered information and actual connection information match). In the configuration in the eleventh row, regarding acquisition of identification information of the registered device (device scheduled to be connected) for each device communication port 110, "identification information of the registered device" that the device communication management unit 10 itself stores is used. That is, the device communication management unit 10 refers to the configuration setting information table 141 and acquires "identification information of the registered device for each device communication port 110." In addition, the device communication management unit 10 makes an inquiry to the device 20 regarding acquisition of identification information of the actual device (the device 20 that is actually connected to that port) for each device communication port 110. That is, the device communication management unit 10 acquires identification information of the device 20 from the device 20 that is actually connected to the device communication port 110. The support tool 60 notifies the user of a result of the comparison process performed by the device communication management unit 10.

In the table shown in Fig. 4, the twelfth row shows a configuration in which the support tool 60 performs a display process and the device communication management unit 10 performs a comparison process (determination of whether registered information and actual connection information match). In the configuration in the twelfth row, regarding acquisition of identification information of the registered device (device scheduled to be connected) for each device communication port 110, "identification information of the registered device" that the device communication management unit 10 itself stores is used. That is, the device communication management unit 10 refers to the configuration setting information table 141 and acquires "identification information of the registered device for each device communication port 110." In addition, regarding acquisition of identification information of the actual device (the device 20 that is actually connected to that port) for each device communication port 110, "identification information of the actual device" that the device communication management unit 10 itself stores is used. That is, the device communication management unit 10 refers to "the identification information 142 of the actual device for each device communication port 110" acquired from the device 20 that is actually connected to the device communication port 110 and acquires "identification information of the actual device." The support tool 60 notifies the user of a result of the comparison process performed by the device communication management unit 10.

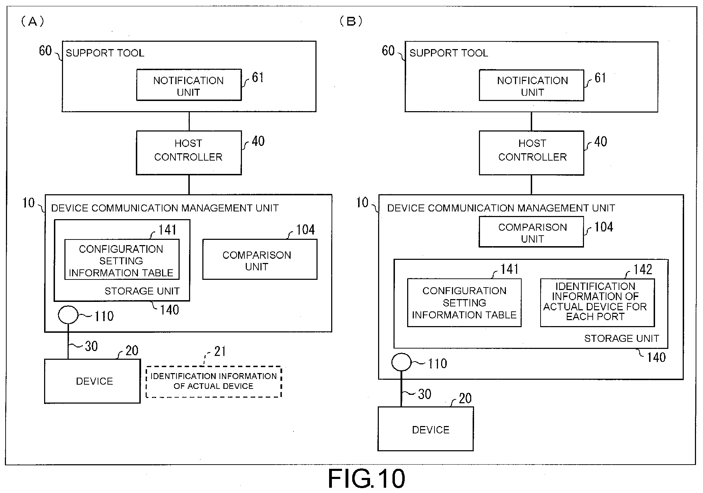

Fig. 10 is a diagram showing an example of execution subjects of a display process and a comparison process in the control system 1 that is different from the examples shown in Fig. 5 to Fig. 9. (A) of Fig. 10 shows an example in which "the support tool 60 includes the notification unit 61 configured to perform a display process and the device communication management unit 10 includes the comparison unit 104 configured to perform a comparison process." In (A) of Fig. 10, the device communication management unit 10 acquires identification information of "the registered device for each device communication port 110" with reference to the configuration setting information table 141 and acquires "the identification information 21 of the actual device for each device communication port 110" from the device 20. The configuration shown in (A) of Fig. 10 corresponds to the configuration shown in the eleventh row in the table shown in Fig. 4. (B) of Fig. 10 shows an example in which "the support tool 60 includes the notification unit 61 configured to perform a display process and the device communication management unit 10 includes the comparison unit 104 configured to perform a comparison process." In (B) of Fig. 10, the device communication management unit 10 acquires "the registered device for each device communication port 110" and "identification information of the actual device for each device communication port 110" with reference to the configuration setting information table 141 and "the identification information 142 of the actual device for each device communication port 110." The configuration shown in (B) of Fig. 10 corresponds to the configuration shown in the twelfth row in the table shown in Fig. 4.

Regarding execution subjects of a display process and a comparison process in the control system 1, most preferably, the comparison unit 104 is included in the device communication management unit 10 (slave device), and the notification unit 61 displays a name of the type of the device 20 (registered device) scheduled to be connected to the device communication port 110 on an external device (the support tool 60 or the HMI 80) connected to the host controller 40.

According to the above configuration, when the device communication management unit 10 includes the storage unit 140 (in particular, the configuration setting information table 141) and the device communication reception processing unit 102 (acquisition unit), it is not necessary for the device communication management unit 10 to acquire information for performing the comparison from another device. That is, in the control system 1, when the device communication management unit 10 includes the storage unit 140 and the device communication reception processing unit 102, the device communication management unit 10 can perform the comparison without separately acquiring identification information of the device 20 (registered device) scheduled to be connected to the device communication port 110 and identification information of the device 20 (actual device) connected to the device communication port 110 from another device. In the control system 1, even if "the device communication management unit 10 does not separately prepare a program for acquiring identification information of the device 20 (registered device) scheduled to be connected to the device communication port 110 and identification information of the device 20 (actual device) connected to the device communication port 110 from another device" the device communication management unit 10 performs the comparison.

Therefore, in the control system 1, there is an effect that it is not necessary for the user to perform creating and adjusting the program or the like and it is possible to reduce a burden on the user. In addition, since it is not necessary to exchange information between the device communication management unit 10 and another device, there is an effect that it is possible to shorten a time for starting the control system 1.

In addition, when a name of the type of the device 20 (registered device) scheduled to be connected to the device communication port 110 is displayed on the HMI 80, there is an effect that the user can easily view the name of the type.

Here, when the host controller 40 (controller) performs a comparison process (that is, when the host controller 40 includes the comparison unit 104), there is an effect that it is possible to shorten a system downtime when the device communication management unit 10 is maintained and ·exchanged in the control system 1. That is, there is an effect that it is not necessary for the device communication management unit 10 after exchange to reset identification information of the device 20 (registered device) scheduled to be connected to the device communication port 110.

Details of the display process and the comparison process in the control system 1 described so far can be arranged as follows. That is, a method for controlling the control system 1 causes a computer including the storage unit 140 (in particular, the configuration setting information table 141) in which configuration information (information stored in the configuration setting information table 141) including identification information of the device 20 (registered device) scheduled to be connected to the device communication port 110 of the device communication management unit 10 (communication port) is stored in the control system 1 which is a master-slave control system including the host controller 40 (controller) as a master device and the device communication management unit 10 (slave device) connected to the host controller 40 via the field network 50 (network) to execute an acquisition step of acquiring identification information of the device 20 from the device 20 (actual device) connected to the device communication port 110, a comparison step of comparing the identification information (identification information of the actual device) acquired in the acquisition step with identification information (identification information of the registered device) included in the configuration information, and a notification step of notifying a user of a name of the type of the device 20 (registered device) scheduled to be connected to the device communication port 110 when it is determined in the comparison step that the identification information (identification information of the actual device) acquired in the acquisition step and identification information (identification information of the registered device) included in the configuration information do not match.

According to the method, in the notification step, when it is determined that identification information of the device 20 (identification information of the actual device) connected to the device communication port 110 and identification information of the device 20 scheduled to be connected to the device communication port 110 (identification information of the registered device) do not match, the user is notified of a name of the type of the device 20 (registered device) scheduled to be connected to the device communication port 110.

Therefore, when the control system 1 notifies the user of a name of the type of the device 20 (registered device) scheduled to be connected to the device communication port 110, there is an effect that the user can easily ascertain the device 20 to be connected to the device communication port 110.

### (IO-Link)

In the control system 1, the device communication management unit 10 and the device 20 may communicate with each other through the IO-Link (registered trademark). An overview of the IO-Link will be described below.

The IO-Link is standardized as a name of "single-drop digital communication interface for small sensors and actuators"(SDCI) in IEC61131-9. The IO-Link is a standardization technology for communication between a master (PLC) (for example, the host controller 40 in the control system 1) which is a control device and a device (for example, the device 20 in the control system 1) such as a sensor and an actuator. The IO-Link is a new point-to-point serial communication protocol used for communication between the master (PLC) and a device such as a sensor and an actuator.

In a protocol of the related art (for example, a communication protocol in the first mode in the control system 1), an on/off signal (1 bit) can be transmitted from only the device to the master (PLC). Unlike the protocol of the related art, the IO-Link is a communication protocol (for example, a communication protocol in the second mode in the control system 1) through which 32-byte (256- bit) data can be received and transmitted (two-way communication). When the master (PLC) and the device such as a sensor and an actuator are connected by the IO-Link, a signal from the device that could receive only binary data such as on/off information in the related art can be acquired as 32-byte numerical value data. Therefore, for example, in the case of a photoelectric sensor, it is possible to acquire information such as an amount of light received, a degree of detection margin, and an internal temperature, and it is possible to determine a product lifespan, and change a threshold value according to deterioration over time in addition to helping find a cause of a problem,.

When the IO-Link is used, for example, it is possible to automate setting, maintenance, and the like of the device. In addition, when the IO-Link is used, it is possible to significantly simplify programming of the master (PLC) and additionally, cost reduction of a wiring cable and the like is possible. As an example of the device, a photoelectric sensor and a proximity switch can be exemplified.

### (IO-Link system)

The IO-Link system includes an IO-Link device (generally, a sensor, an actuator, or a combination thereof), a standard three-wire type sensor/actuator cable, and an IO-Link master (for example, the device communication management unit 10 in the control system 1).

Here, the IO-Link master includes one or a plurality of ports, and one IO-Link device can be connected to each port. The IO-Link master performs point-to-point communication with the IO-Link device. The IO-Link master can transmit and receive not only binary data (1-bit data) such as on/off information of the related art but also the following information to and from the IO-Link device. That is, the IO-Link master can transmit and receive information (data larger than 1 bit) other than binary data such as on/off information, for example, identification information of a device, communication properties of a device, device parameters, and process and diagnostic data information to and from the IO-Link device.

The IO-Link device refers to a device (for example, the device 20(C) in the control system 1) capable of transmitting and receiving data larger than 1 bit to and from the IO-Link master.

### (Two communication modes)

The IO-Link device can operate without the IO-Link master in a digital exchange mode (for example, the first mode in the control system 1) of the related art called a standard IO (SIO). That is, the IO-Link device can operate using a master that can receive only binary data such as on/off information from a sensor. Similarly, the IO-Link master can operate a conventional device (a device that can receive only binary data such as on/off information from the IO-Link master, for example, the device 20(S) in the control system 1) using an SIO.

The port of the IO-Link master stores configuration data. When a certain port is set in the SIO mode, the IO-Link master operates the port in the same manner as a port of the related art (a port through which only binary data such as on/off information can be transmitted and received). When the port is set in a communication mode (COM mode) (for example, the second mode in the control system 1), the IO-Link master can transmit and receive data larger than 1 bit to and from a device (the IO-Link device, for example, the device 20(C) in the control system 1) connected to that port.

### (Comparison function)

When the IO-Link is used, it is possible to acquire information (data larger than 1 bit) other than on/off data from a device such as a sensor and an actuator (the IO-Link device). Specifically, it is possible to acquire identification information (a vendor ID, a device ID, a revision, and a serial No.) and the like of the device.

The IO-Link master has a comparison function of comparing a device scheduled to be connected with a device that is actually connected to the port for each port. The IO-Link master performs a comparison process at a timing at which IO-Link communication is established. For example, when an IO-Link device is connected to a port, the IO-Link master acquires identification information of a device and communication properties of a device from the connected IO-Link device.

In addition, in the IO-Link master, configuration information including identification information of a device (the IO-Link device) scheduled to be connected for each port is stored in advance.

The IO-Link master refers to the configuration information, acquires identification information of a device (the IO-Link device) scheduled to be connected to a port, and determines whether the acquired identification information matches identification information of a device (the IO-Link device) that is actually connected to the port.

For example, the IO-Link master determines whether "a vendor ID, a device ID, an IO-Link revision, and a serial No." of the device scheduled to be connected match "a vendor ID, a device ID, an IO-Link revision, and a serial No." of the device that is actually connected for each port. When it is determined that information items do not match (comparison fail), the IO-Link master stops IO-Link communication.

Here, for identification information used when the IO-Link master performs a comparison process, any one of the following two patterns can be selected. In the first pattern, the IO-Link master can perform a comparison process using a vendor ID, a device ID, and an IO-Link revision (simple comparison function). In the second pattern, the IO-Link master can perform a comparison process using a vendor ID, a device ID, an IO-Link revision, and a serial No. (detailed comparison function). Here, when a serial No. is not referred to during the comparison process, if the device is a device with the same type as the registered device (a device whose vendor ID, device ID, and IO-Link revision are the same as those of the registered device except for a serial No.), although the serial No. does not match, the IO-Link master determines that comparison has been passed and can perform IO-Link communication with the device after exchange.

### [Example of realization by software]

In the control system 1, the notification unit 61, the device communication processing unit 101, the device communication reception processing unit 102, the device communication transmission processing unit 103, the comparison unit 104, the field bus control unit 131, the upper-level communication reception processing unit 132, and the upper-level communication transmission processing unit 133 may be realized by a logic circuit (hardware) formed in an integrated circuit (IC chip) and may be realized by software using a central processing unit (CPU).

In the latter case, a computer for realizing the control system 1 includes a CPU that executes an instruction of a program which is software for implementing functions of the notification unit 61, the device communication processing unit 101, the device communication reception processing unit 102, the device communication transmission processing unit 103, the comparison unit 104, the field bus control unit 131, the upper-level communication reception processing unit 132, and the upper-level communication transmission processing unit 133, a read only memory (ROM) in which the program and various types of data that can be read by a computer (or a CPU) are recorded or a storage device (these are referred to as a "recording medium"), and a random access memory (RAM) that opens the program. Thus, when the computer (or the CPU) reads and executes the program from the recording medium, the object of the present invention is achieved. As the recording medium, a "non-transitory tangible medium," for example, a tape, a disk, a card, a semiconductor memory, or a programmable logic circuit can be used. In addition, the program may be supplied to the computer through an arbitrary transmission medium (such as a communication network and broadcast waves) that can transmit the program. Here, the present invention may be realized in the form of a data signal combined with carrier waves embodied according to electric transmission of the program.

The information processing program for realizing the control system 1 using a computer is, for example, an information processing program causing a computer including a storage unit in which configuration information including identification information of a device scheduled to be connected to a communication port of a slave device is stored in a master-slave control system including a controller as a master device and the slave device that is connected to the controller via a network to execute an acquisition step of acquiring identification information of a device from the device connected to the communication port, a comparison step of comparing the identification information acquired in the acquisition step with the identification information included in the configuration information, and a notification step of notifying a user of a name of the type of the device scheduled to be connected to the communication port when it is determined in the comparison step that the identification information acquired in the acquisition step and the identification information included in the configuration information do not match.

### (Supplements)

In order to address the above problem, a master-slave control system according to an embodiment of the present invention is a master-slave control system including a controller as a master device and a slave device that is connected to the controller via a network and includes a communication port to which a device is connected. The master-slave control system includes a storage unit configured to store configuration information including identification information of a device scheduled to be connected to the communication port; an acquisition unit configured to acquire identification information of a device from the device connected to the communication port; a comparison unit configured to compare identification information acquired from the acquisition unit with the identification information included in the configuration information; and a notification unit configured to, when the comparison unit determines that identification information acquired by the acquisition unit and the identification information included in the configuration information do not match, notify a user of a name of the type of the device scheduled to be connected to the communication port.

According to the above configuration, when it is determined that identification information of the device connected to the communication port and identification information of the device scheduled to be connected to the communication port do not match, the notification unit notifies the user of a name of the type of the device scheduled to be connected to the communication port.

Therefore, when the master-slave control system notifies the user of a name of the type of the device scheduled to be connected to the communication port, there is an effect that the user can easily ascertain the device to be connected to the communication port.

In the master-slave control system according to the embodiment of the present invention, the identification information included in the configuration information may be information that is registered in advance by the user.

According to the above configuration, the master-slave control system has an effect that, using the configuration information that is registered in advance by the user, it is possible to notify the user of a name of the type of the device scheduled to be connected to the communication port.

In the master-slave control system according to the embodiment of the present invention, the comparison unit may be included in at least one of the controller, the slave device, an external device connected to the controller, and an external device connected to the slave device.

According to the above configuration, the comparison unit is included in at least one of the controller, the slave device, an external device connected to the controller, and an external device connected to the slave device.

Therefore, the master-slave control system has an effect that, on at least one of the controller, the slave device, an external device connected to the controller and an external device connected to the slave device, identification information that can be acquired by the acquisition unit and identification information included in the configuration information are compared and a comparison result (in particular, a name of the type of the device scheduled to be connected) can be displayed.

In the master-slave control system according to the embodiment of the present invention, the notification unit may display a name of the type of the device scheduled to be connected to the communication port on at least one of the controller, the slave device, an external device connected to the controller, and an external device connected to the slave device.

According to the above configuration, the master-slave control system has an effect that a name of the type of the device scheduled to be connected to the communication port is displayed on at least one of the controller, the slave device, an external device connected to the controller, and an external device connected to the slave device and thus it is possible to notify the user thereof.

In the master-slave control system according to the embodiment of the present invention, the comparison unit may be included in the slave device and the notification unit may display a name of the type of the device scheduled to be connected to the communication port on an external device connected to the controller.

According to the above configuration, when the slave device includes the storage unit and the acquisition unit, it is not necessary for the slave device to acquire information for performing the comparison from another device. That is, in the master-slave control system according to the present invention, when the slave device includes the storage unit and the acquisition unit, the slave device can perform the comparison without separately acquiring identification information of the device scheduled to be connected to the communication port and identification information of the device connected to the communication port from another device. In the master-slave control system according to the present invention, even if "the slave device does not separately prepare a program for acquiring identification information of the device scheduled to be connected to the communication port and identification information of the device connected to the communication port from another device" the slave device performs the comparison.

Therefore, in the master-slave control system according to the present invention, there is an effect that it is not necessary for the user to perform creating and adjusting the program or the like and it is possible to reduce a burden on the user. In addition, since it is not necessary to exchange information between the slave device and another device, there is an effect that it is possible to shorten a time for starting the master-slave control system according to the present invention.

In addition, for example, when a name of the type of the device scheduled to be connected to the communication port is displayed on the external device which is an HMI, there is an effect that the user can easily view the display name.

In the master-slave control system according to the embodiment of the present invention, the slave device and the device may communicate with each other through an IO-Link (registered trademark).

According to the above configuration, there is an effect that the slave and slave control system can communicate with the device through the IO-Link (registered trademark).

In order to address the above problem, a method for controlling a master-slave control system according to an embodiment of the present invention causing a computer including a storage unit in which configuration information including identification information of a device scheduled to be connected to a communication port of a slave device is stored in a master-slave control system including a controller as a master device and the slave device connected to the controller via a network to execute: an acquisition step of acquiring identification information of a device from the device connected to the communication port; a comparison step of comparing the identification information acquired in the acquisition step with the identification information included in the configuration information; and a notification step of notifying a user of a name of the type of the device scheduled to be connected to the communication port when it is determined in the comparison step that the identification information acquired in the acquisition step and the identification information included in the configuration information do not match.

According to the method, in the notification step, when it is determined that identification information of the device connected to the communication port and identification information of the device scheduled to be connected to the communication port do not match, the user is notified of a name of the type of the device scheduled to be connected to the communication port.

Therefore, when the master-slave control system notifies the user of a name of the type of the device scheduled to be connected to the communication port, there is an effect that the user can easily ascertain the device to be connected to the communication port.

The present invention is not limited to the above embodiments, and various modifications can be made within the scope of the claims, and embodiments obtained by appropriately combining technical methods disclosed in different embodiments are included in the technical scope of the present invention.

### [Reference Signs List]

1 Control system (master-slave control system)
10 Device communication management unit (slave device)
20 Device
21 Identification information (identification information of device connected to communication port)
40 Host controller (controller)
50 Field network (network)
60 Support tool (external device)
61 Notification unit
80 HMI (external device)
104 Comparison unit
110 Device communication port (communication port)
102 Device communication reception processing unit (acquisition unit)
140 Storage unit
141 Configuration setting information table (configuration information)
142 Identification information (identification information of device connected to communication port)

## Claims

1. A master-slave control system including a controller as a master device and a slave device that is connected to the controller via a network and includes a communication port to which a device is connected, the master-slave control system comprising:
a storage unit configured to store configuration information including identification information of a device scheduled to be connected to the communication port;
an acquisition unit configured to acquire identification information of a device from the device connected to the communication port;
a comparison unit configured to compare identification information acquired from the acquisition unit with the identification information included in the configuration information; and
a notification unit configured to, when the comparison unit determines that identification information acquired by the acquisition unit and the identification information included in the configuration information do not match, notify a user of a name of the type of the device scheduled to be connected to the communication port.

2. The master-slave control system according to claim 1,
wherein the identification information included in the configuration information is information that is registered in advance by the user.

3. The master-slave control system according to claim 1 or 2,
wherein the comparison unit is included in at least one of the controller, the slave device, an external device connected to the controller, and an external device connected to the slave device.

4. The master-slave control system according to any one of claims 1 to 3,
wherein the notification unit displays a name of the type of the device scheduled to be connected to the communication port on at least one of the controller, the slave device, an external device connected to the controller, and an external device connected to the slave device.

5. The master-slave control system according to any one of claims 1 to 4,
wherein the comparison unit is included in the slave device, and
wherein the notification unit displays a name of the type of the device scheduled to be connected to the communication port on an external device connected to the controller.

6. The master-slave control system according to any one of claims 1 to 5,
wherein the slave device and the device communicate with each other through an IO-Link (registered trademark).

7. A method for controlling a master-slave control system causing a computer including a storage unit in which configuration information including identification information of a device scheduled to be connected to a communication port of a slave device is stored in a master-slave control system including a controller as a master device and the slave device connected to the controller via a network to execute:
an acquisition step of acquiring identification information of a device from the device connected to the communication port;
a comparison step of comparing the identification information acquired in the acquisition step with the identification information included in the configuration information; and
a notification step of notifying a user of a name of the type of the device scheduled to be connected to the communication port when it is determined in the comparison step that the identification information acquired in the acquisition step and the identification information included in the configuration information do not match.

8. An information processing program causing a computer including a storage unit in which configuration information including identification information of a device scheduled to be connected to a communication port of a slave device is stored in a master-slave control system including a controller as a master device and the slave device that is connected to the controller via a network to execute
an acquisition step of acquiring identification information of a device from the device connected to the communication port;
a comparison step of comparing the identification information acquired in the acquisition step with the identification information included in the configuration information; and
a notification step of notifying a user of a name of the type of the device scheduled to be connected to the communication port when it is determined in the comparison step that the identification information acquired in the acquisition step and the identification information included in the configuration information do not match.

9. A computer readable recording medium in which the information processing program according to claim 8 is recorded.
